Europäisches Patentamt

European Patent Office

Office européen des brevets

(19)

(11) Publication number: **0 018 821**
**A1**

(12) **EUROPEAN PATENT APPLICATION**

(21) Application number: **80301411.7**

(22) Date of filing: **30.04.80**

(51) Int. Cl.³: **G 05 D 23/13**
**D 06 F 33/02**

(30) Priority: **30.04.79 US 35031**

(43) Date of publication of application:
**12.11.80 Bulletin 80/23**

(84) Designated Contracting States:
**DE FR GB IT**

(71) Applicant: **EATON CORPORATION**
**100 Erieview Plaza**
**Cleveland Ohio 44114(US)**

(72) Inventor: **Jones, William Haslet**
**258 South Oakland**
**Villa Park Illinois 60181(US)**

(74) Representative: **Slight, Geoffrey Charles et al,**
**Graham Watt & Co. Riverhead**
**Sevenoaks Kent TN13 2BN(GB)**

(54) **Temperature control for liquid in a container.**

(57) A control for a container (12) such as that in a washing machine for infinitely controlling the temperature of liquid such as water in the container (12) by alternately providing for the flow of hot water through a first passageway (14) and cold water through a second passageway (16) to the container. The control is operable to infinitely vary the temperature of the water in the container between the temperature of the hot water in the first passageway (14) and the temperature of the cold water in the second passageway (16) and includes a first valve (18) for controlling the flow of hot water and a second valve (22) for controlling the flow of cold water to the container (12). A reference signal generator (26) establishes an infinitely variable reference signal indicative of the desired temperature of the water in the container and a temperature sensor (30) senses the actual temperature of water in the container (12) and establishes a feedback signal indicative thereof. The control further includes a first comparator (34) responsive to the reference signal and the feedback signal for establishing an error signal indicative of the error between the desired temperature and the actual temperature of the water in the container. A periodic signal generator (40) is provided for establishing a periodic input signal and a second comparator (46) is responsive to the error signal and the periodic input signal and establishes a periodic output signal having on-time and off-time during each cycle. Switching means (58, 62) are provided responsive to the periodic output signal for energizing the first valve (18) during the on-time of the periodic output signal and energizing the second valve (22) during the off-time of the periodic output signal.

_Fig. 1_

## Temperature Control for Liquid in a Container

The present invention relates to a temperature control system for liquid in a container such as in a washing machine and more particularly, to a temperature control system which alternately provides for the flow of hot water and cold water to the washing machine to maintain the temperature of water in the machine at a predetermined temperature which may be infinitely varied.

Temperature control systems for washing machines are known in the art. One example of a known temperature controller is disclosed in the U.S. Patent 3,772,900 which discloses a temperature controller which energizes one of the hot or cold water valves to direct water to the washing machine until a sensor indicates that the water in the machine is at the desired temperature. Other examples of temperature controls for washing machines are disclosed in the U.S. Patent 3,707,856, U.S. Patent, 3,349,579 and U.S. Patent 3,521,470.

In the known prior art washing machines, the water temperature is not infinitely variable. Generally, washing machines have three temperature settings which are hot, cold and warm. When the temperature is set at "hot" only water from the hot water line is added to the machine and when the temperature is set at "cold" only water from the cold water line will be added to the machine. When the temperature is set at "warm" a predetermined mixture of cold and hot water will be blended. It should be appreciated that the temperature of water in the hot and cold water lines varies and that the temperature of water in the machine will also vary due to the fact that the water is blended by volume irrespective of the temperature of water in the hot and cold water lines. It has been found that 90% of the energy required to wash a load of clothes is utilized heating the water. Thus, if the water temperature can be accurately controlled the energy requirements of the machine can be reduced.

The present invention provides a new and improved control for liquid in a container such as a washing macnine for controlling the temperature of water in the container by alternately providing for the flow of hot water to the chamber through a first passageway and cold water to the chamber through a second passageway. The control includes first and second valves for controlling the flow of hot and cold water, respectively, to the container, a reference signal generator for establishing a reference signal indicative of the desired temperature of water in the container, and a temperature sensor for sensing the actual temperature of the water in the container and establishing a feedback signal indicative thereof. A first comparator is provided responsive to the reference signal and the feedback signal for establishing an error signal indicative of the difference between the actual temperature and the desired temperature of water in the chamber. A periodic signal generator establishes a periodic input signal. A second comparator is responsive to the error signal and the periodic input signal and establishes a periodic output signal having a portion representative of on-time and a portion representative of off-time during each cycle. The periodic output signal has a frequency dependent upon the frequency of the periodic input signal and a duty cycle dependent upon the error signal. Means is provided responsive to the periodic output signal for energizing the first valve to effect the flow of hot water to the container during the on-time and for energizing the second valve to effect the flow of cold water to the container during the off-time of each cycle of the periodic output signal.

The present invention provides for accurate inifinite control of the water temperature irrespective of the temperature of the water in the hot and cold water lines. Also, since the hot and cold water valves are either in their open or closed status, there is no need for proportional controls to open one of the water valves to less than its fully open state. Thus, a low cost system can be provided with reduced energy requirements relative to the known prior art systems.

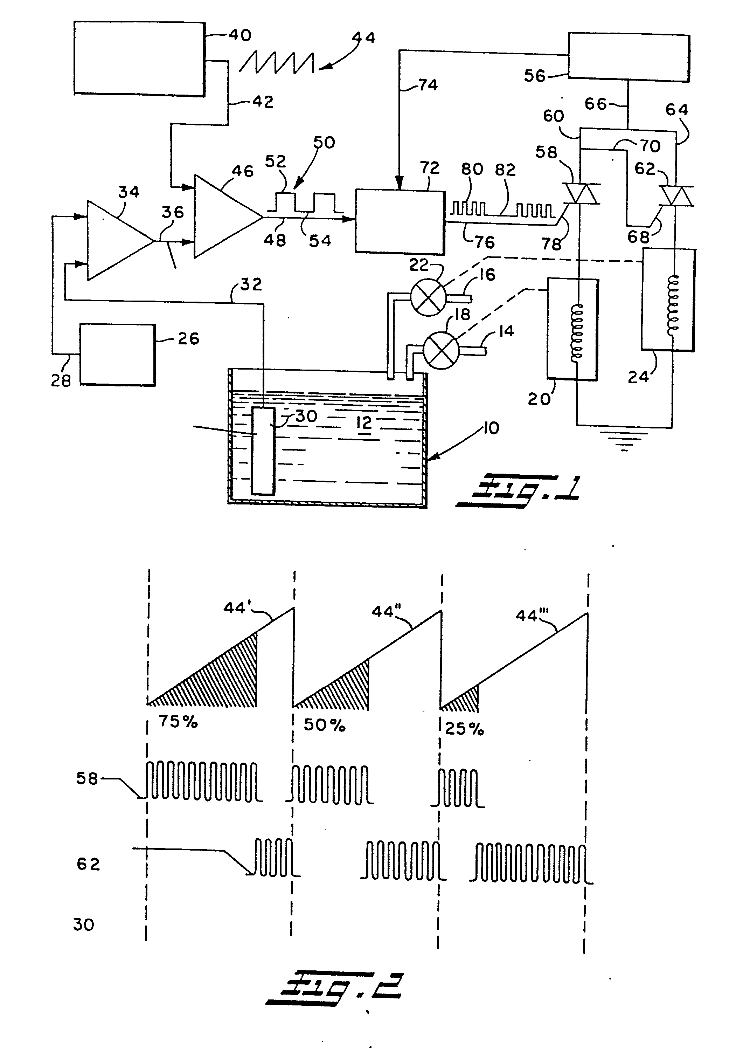

One way of carrying out the invention is described below with reference to the drawings, which illustrate only one specific embodiment, in which FIGURE 1 is a schematic illustration of the control system of the present invention, and

FIGURE 2 is a timing diagram more fully illustrating the periodic wave form established by the ramp generator and the periodic gate signals directed to the gates of the triacs for energizing the hot and cold water valves.

Referring to the figures, and more particularly Figure 1, a washing machine 10 is schematically illustrated.  The washing machine 10 includes a chamber or container 12 therein which is adapted to be filled with water of a predetermined temperature.  A first fluid passageway 14 is provided for delivering hot water to the chamber 12 and a second fluid passageway 16 is provided for directing flow of cold water to the chamber 12.  A valve 18 is disposed in the hot water line 14 for controlling the flow of water therethrough.  The hot water valve 18 includes a coil, schematically illustrated at 20, to effect opening of the valve upon energization thereof in a well known manner.  A cold water valve 22 is disposed in the cold water input line 16 to control the flow of cold water therethrough into the chamber 12.  A coil, schematically illustrated at 24, is associated with the cold water valve 22 and effects opening thereof to allow the flow of cold water through the line 16 upon energization of the coil 24.  The hot water valve 18 and cold water valve 22 are alternately opened and closed preferably at a fixed frequency for varying periods of time to vary the temperature of the water in the chamber 12.

Assuming normal water temperatures in the hot and cold water lines, if it is desired to raise the temperature of the water in the chamber 12, the hot water valve 18 and cold water valve 22 will be alternately opened and closed with the hot water valve being held open for a longer period of time than the cold water valve 22.  If it is desired to lower the temperature of the water in the chamber 12, then the hot and cold water valves 18 and 22 will be alternately opened and closed with the cold water valve being held open for a longer period of time than the hot water valve. If it is desired to maintain the temperature in the chamber 12 at a constant temperature, halfway between the temperature of the water in the cold water line and the temperature of the water in the hot water line, then the hot water valve 18 and cold water valve 22 will be alternately turned on and off with the period for conduction of the hot water valve 18 equalling the period of conduction for the cold water valve 22. The relative periods of conduction of the hot and cold water valves will vary dependent upon the actual temperatures of water in the hot and cold water lines and the desired temperature of the water in the chamber 12.

The control for controlling the energization of the valves 18, 22 includes a reference signal generator 26 which establishes a reference signal on line 28 having a magnitude indicative of the desired temperature of the water in the chamber 12. The reference signal generator 26 can be manually varied by the washing machine operator to vary the magnitude of the signal on line 28 to thereby vary the desired set point temperature for the water in the chamber 12.

A sensor 30 is suitably located in the washing machine 10 to sense the temperature of the water in the chamber 12. The sensor 30 establishes a signal on line 32 indicative of the actual water temperatures sensed by the sensor 30. The sensor may be of any convenient type, for example, a thermocouple, thermistor, or semiconductor device as will be known to those having skill in the art. Additionally, while the sensor is disclosed located in the chamber 12, it is also contemplated that the sensor 30 could be located at other locations for sensing the temperature of water in the machine. For example, the sensor could be located in a valve body of a valve for mixing the hot and cold water or it could be located at the outlet to the mixing valve. Thus, when the sensor is referred herein to being located in the chamber 12 other convenient locations are also contemplated.

A comparator 34 is operable to compare the signal on line 28 indicative of the desired temperature of the water with the signal on line 32 indicative of the actual sensed temperature of the water in the chamber 12. The comparator 34 establishes an error signal on line 36 which has a magnitude which is indicative of the difference between the desired temperature of the water and the actual sensed temperature of the water.

A ramp generator 40 is provided for establishing a periodic wave form on the output line 42 thereof. The ramp generator 40 establishes a ramp wave form 44, schematically illustrated      in Figure 2, which has a constant frequency and constant magnitude. The frequency of the wave ramp wave form 44 will control the frequency at which the hot water valve 18 and cold water valve 22 are cycled. Typically, the frequency of cycling of the hot and cold water valves will be between 1 and 6 cycles per minute. It has been found that more frequent cycling of the valves 18,22 is not required to maintain a desired water temperature in the chamber 12. Additionally, more frequent cycling of the valves 18, 22 causes undesirable wear of the valves.

The ramp wave form on line 42 and the error signal on line 36 are directed to inputs of a comparator 46. The output of the comparator 46 on line 48 will be a square wave as is schematically illustrated at 50 having a frequency dependent upon the frequency of the wave form 44 established by the ramp generator 40 and a duty cycle dependent on the magnitude of the error signal on line 36. Each cycle of the square wave will have a portion 52 during which the square wave is high and which is representative of "on time" and a portion 54 during which the square wave is low and which is representative of "off time". The on portion 52 and the off portion 54, when added together, form one cycle with the cycle having a frequency equal to the frequency of the ramp wave form 44. The duty cycle of the periodic wave form 50 is equal

7     0018821

to the "on time" or portion 52 of the wave form 50 as compared to time it takes to complete one cycle of the wave form 50. Wave form 50, as is schematically illustrated in Figure 1, has a duty cycle of approximately 50%, meaning that it is high 50% of the time and low 50% of the time.

The periodic output from comparator 46 is utilized to alternately effect energization of the coil 20 associated with the hot water valve 18 during the "on time" of each cycle of the wave form 50 and energization of the coil 24 associated with the cold water valve 22 during the "off time" of each cycle of the periodic wave form 50. If DC power is utilized for energizing the coils 20,24 of the valves 18,22, then the wave form 50 can be applied to suitable switching means to effect energization thereof.

In the preferred embodiment, it is desirable to use an AC power source 56 to effect energization of the coils 20,24 of the valves 18,22. A triac 58 is series-connected in a line 60 with the coil 20 for the hot water valve 18 and a triac 62 is series-connected in a line 64 with the coil 24 for the cold water valve 22. An output line 66 from the AC power source 56 connects the lines 60 and 64 to the AC power source 66.

When triac 58 conducts, AC power will be applied through lines 66 and 60 through the triac 58 to effect energization of the coil 20 for the hot water valve 18 to thereby provide for the flow of hot water through the passageway 14 and valve 18 to the chamber 12. When triac 62 conducts, AC power will be applied through the lines 66 and 64 through the triac 62 to the coil 24 to open the cold water valve 22 and provide for the flow of cold water through the passageway 16 to the chamber 12.

Triac 62 is provided with a gate 68 which is connected via line 70 to line 60 above triac 58. When triac 58 is conducting, no signal will be applied along line 70 to the gate 68 of triac 62 and triac 62 will not conduct. When triac 58 is not conducting, a periodic AC wave form from

0018821

the AC power source 56 will be applied from line 60 along line 70 to the gate 68 of triac 62. The AC wave form will apply periodic signals to the gate 68 of triac 62 to effect continuous conduction of triac 62 as long as gate signals are applied to gate 68. Subsequent conduction of triac 58 will remove the gate signals from line 70 to the gate 68 of triac 62 to thereby cause triac 62 to cease conduction when the potential of the AC wave form on line 64 goes to zero.

A zero crossing detector 72 is provided to ensure continuous conduction of triac 58 during the on-time of the periodic wave form 50. The triac 58 will have a tendency to turn off when the AC wave form applied thereto goes through zero unless periodic signals are applied to the gate 78 of the triac 58 to keep it from extinguishing every time the AC wave form applied thereto goes to zero.

The zero crossing detector 72 includes an input line 74 from the AC power source 56 having a signal thereon which is indicative of the frequency of the AC power source 56. The periodic output signal 50 indicative of the error between the actual sensed water temperature and the desired water temperature is applied on line 48 to an input of the zero crossing detector 72. The zero crossing detector operates to generate a series of periodic pulses which are applied along line 76 to the gate 78 of triac 58. The periodic pulses generated by the zero crossing detector occur every time the AC wave form from the AC power source 56 goes through zero and the periodic wave form 50 on line 48 is high. The periodic pulses on line 76 are schematically illustrated at 80.

When the periodic wave form 50 is low the zero crossing detector will not establish the periodic pulses 80 on line 76 and triac 58 will not conduct. This is exemplified by the low portion 82 of the wave form 80. When the wave form 80 is low, as at 82, the triac 58 will not conduct and the triac 62 will conduct.

0018821

Figure 2 more fully illustrates the proportional control technique utilized for alternately opening the hot water valve 18 and cold water valve 22 during each cycle of the wave form 50. In Figure 2, the ramp wave form 44 is illustrated to indicate the time period employed for one cycle. Each toothed segment of the wave form 44 is indicative of the time period required for one cycle of the square wave 50. During each cycle, for a portion of the cycle, the hot water valve 18 will be opened and the cold valve 22 will be closed and for the remainder of the cycle, the hot water valve 18 will be closed and the cold valve 22 will be opened.

In the first cycle illustrated in Figure 2 by the ramp wave form 44', the sensor 30 senses the temperature of the water in the chamber 12 to be below the set point set by the reference signal generator 26. In this particular instance, the magnitude of the error signal between the desired temperature and the actual sensed temperature is such as to provide a duty cycle of 75% for wave form 50. In this case, it is desired to have the hot water valve opened and the cold water valve 22 closed during 75% of each cycle and the cold water valve 22 opened and the hot water valve 18 closed during the remaining 25% of the time period. Thus, the gate signals to triac 58 occur during 75% of the time period for one cycle as is illustrated and the gate signals to triac 62 occur during the remaining 25% of the time period.

The second cycle, illustrated in Figure 2, occurs during the ramp wave form 44". In this case the sensor 30 senses the temperature of the water in chamber 12 to be equal to the set point established by the reference signal generator 26. In this instance, it is desired to have the hot water valve 18 opened and the cold water valve 22 closed during 50% of the cycle and the cold water valve 22 opened and the hot water valve 18 closed during the remaining 50% of the cycle. In this case, it can be seen that the gate signals to triac 58 occur during 50% of the cycle and the gate signals for triac 62 occur during the other 50% of the cycle.

The last example shown in Figure 2, during the cycle indicated by the ramp wave form 44''', discloses the case where the sensor 30 senses the temperature of the water in chamber 12 to be above the set point as established by the reference signal generator 26.  In this case, the error signal on line 36 effects opening of the hot water valve 18 and closing of cold water valve 22 during 25% of the cycle and the opening of cold water valve 22 and closing of hot water valve 18 during the remaining 75% of the cycle.  As can be seen from Figure 2, the gate signals to triac 58 occur during 25% of the cycle and the gate signals to triac 62 occur during the remaining 75% of the cycle.

It should be appreciated that the present control provides a closed loop feedback control in which the water temperature in the washing machine is sensed, compared with a reference and the percent of on-time of the hot and cold fill valves varied in proportion to the error to produce the desired water temperature in the washing machine.  The control will operate to continuously cycle the hot and cold water valve once during each cycle of the periodic waveform 50 which, in the preferred embodiment, occurs between one and six times per minute.  Thus, the hot and cold water valves will be each cycled between one and six times per minute.

The present control allows the temperature of water in the machine to be infinitely varied between the temperature of water in the hot water line and the temperature of the water in the cold water line by modulating the flow of hot and cold water to the chamber 12.  This provides a great advantage and energy savings over conventional machines which merely blend hot and cold water irrespective of their temperatures. Additionally, the present control provides for the proportional control

of the water flow into the chamber 12 by blending the hot and cold water during periodic increments thereby providing an accurate control with an extremely quick response time.

While the control has been described as modulating both the hot and cold water flow it should be appreciated that if only warm water was required the cold water flow could be continuous and the hot water flow could be modulated. If basically hot water was required the hot water flow could be constant and the cold water flow could be modulated. If, for example, only warm water was required the same basic structures could be utilized, except that the coil 24 for the cold water valve would be removed from the series circuit with triac 62 and would be continuously energized anytime that it was desired to add water to the machine. The hot water valve 18 would then be periodically cycled once during each period of square wave 50 and would be energized for a period during each cycle which was dependent upon the error signal on line 36 indicative of the difference between the sensed temperature and the desired temperature of the water in chamber 12.

While the control has been shown as utilized with a washing machine, it should be appreciated that it could be applied to other systems in which it is desired to infinitely control the temperature of a liquid in a container by adding liquids of at least two different temperatures together and varying the proportions of the different temperature liquids to control the temperature of the liquid in the container.

From the foregoing, it should be apparent that a new and improved control for a washing machine for controlling the temperature of water in the machine by alternately providing for the flow of hot water and cold water to the machine has been provided. The control includes a first valve for controlling the flow of hot water to the machine and a second valve for controlling the flow of cold water

12

0018821

to the machine. A reference signal generator establishes a reference signal indictive of the desired temperature of the water and a temperature sensor is provided for sensing the actual temperature of the water and establishing a feedback signal indicative thereof. A first comparator is provided responsive to the reference signal and the feedback signal for establishing an error signal indicative of the difference between the desired temperature and the actual temperature of the water in the machine. A periodic signal generator establishes a periodic input signal and a second comparator is responsive to the periodic input signal and the error signal for establishing a periodic output signal having a portion representative of one-time and a portion representative of off-time during each cycle. The periodic output signal has a frequency which is dependent upon the frequency of the periodic input signal and a duty cycle dependent upon the error signal. A means is provided responsive to the periodic output signal for energizing the first valve to effect the flow of hot water to the machine during the on-time of the periodic output signal and for energizing the second valve to effect the flow of cold water to the machine during the off-time of the periodic output signal.

Claims.

1.    A control for controlling the temperature of liquid in a container (12) having first and second passageway means (14, 16) associated therewith for delivering liquid at first and second temperatures, respectively, to the container (12),

characterised by first valve means (18) adapted to control the flow of liquid at said first temperature through the first passageway (14) to the container (12),

second valve means (22) adapted to control the flow of liquid at said second temperature through said second passageway (16) to the container (12),

reference means (26) for establishing a signal indicative of the desired fluid temperature in the container (12),

sensing means (30) for sensing the actual temperature of liquid in the container (12),

means (34) responsive to said reference means (26) and said sensing means (26) for establishing an error signal indicative of the difference between the desired temperature and the actual temperature of the liquid in the container, and

means (58, 62) responsive to said error signal for periodically cycling at least one of said first and second valve means (18, 22) said means responsive to said error signal periodically opening at least said one of said first and second valve means (18, 22) once during each cycle to effect the flow of liquid at said first and second temperature to said container (12) for a time period dependent upon said error signal.

2.    A control for controlling the temperature of liquid in a container (12) as claimed in claim 1, characterised by means (58, 62) for continuously opening the other of said first and second valve means during the periodic cycling of said one of said first and second valve means by said means responsive to said error signal.

3.   A control for controlling the temperature of liquid in a container as claimed in claim 2, characterised in that said means (58, 62) for continuously opening the other of said first and second valve means and said means (58, 62) responsive to said error signal operate to provide the continuous flow of said liquid associated with said other valve means and the periodic flow of said liquid associated with said one valve means to control the temperature of liquid in said container (12) at a predetermined temperature as set by said reference means (26).

4.   A control for controlling the temperature of liquid in a container as claimed in claim 2, characterised by first coil means (20) associated with said first valve means (18) for effecting operation of said first valve means (18) upon energization of said first coil means (20) and second coil means (24) associated with said second valve means (22) for effecting operation of said second valve means (22) upon energization of said second coil means (24).

5.   A control for controlling the temperature of liquid in a container as claimed in claim 2, characterised by a periodic signal generator (40) for establishing a periodic input signal, said means (58) responsive to said error signal being further responsive to said periodic input signal for periodically opening said first valve means (18) at a frequency dependent upon the frequency of said periodic input signal and for a time period dependent upon said error signal.

6.   A control for controlling the temperature of a liquid in a container as claimed in claim 1, characterised in that the flow of hot liquid to the container (12) through the first passageway means (14) and cold liquid to the container through the second passageway means (16) are alternately provided for:

that the means responsive to said reference means (26) is a first comparator means (34),

that a periodic signal generator (40) is provided for establishing a periodic input signal,

that second comparator means (46) responsive to said error signal and said periodic input signal are provided for establishing a periodic output signal having a portion representative of on-time and a portion representative of off-time during each cycle,

said periodic output signal having a frequency dependent upon the frequency of said periodic input signal and a duty cycle dependent upon said error signal, and that

means (58, 62) responsive to said periodic output signal are provided for energizing said first valve means (18) to effect the flow of hot liquid to the container (12) during the on-time of said periodic output signal and for energizing said second valve to effect the flow of cold liquid to the container (12) during the off-time of said periodic output signal.

7.   A control for controlling the temperature of a liquid in a container as claimed in claim 6, characterised in that an AC power source (56) is provided for supplying power for effecting energization of said first and second valves means (18, 22) and that said means (58, 62) responsive to said periodic output signal directs power from said AC power source (56) to said first valve means (18) to effect the flow of hot liquid into the container during the on-time of each of the plurality of cycles of said periodic output signal and directs power to said second valve means (22) to effect the flow of cold liquid into the container during the off-time of each of the plurality of cycles of said periodic output signal.

8.   A control for controlling the temperature of a liquid as claimed in claim 7, characterised in that a zero crossing detector (72) responsive to the frequency of said AC power source (56) and said periodic output signal is provided.

9.    A control for controlling the temperature of a liquid as claimed in claim 8, characterised in that first coil means (20) associated with said first valve means (18) are provided for effecting operation of said first valve means (18) upon energization of said first coil means (20) and second coil means (24) associated with said second valve are provided for effecting operation of said second valve means (22) upon energization of said second coil means (24), and that said means for periodically energizing said first valve means (18) is a first triac (58) series connected with said AC power supply (56) and said first coil means (20)and said means for energizing said second valve means (22) is a second triac (62) series connected with said AC power supply (56) and said second coil means (24),

said zero crossing detector (72) periodically gating said first triac (58) whenever said zero crossing detector (72) detects a zero crossing in the AC wave form from said AC power supply (56) during said on-time of said periodic output signal to enable said first triac (58) to conduct and energize said first coil means (20) to effect operation of said first valve means (18) for a period dependent upon the duty cycle of said periodic output signal,

said zero crossing detector (72) periodically gating said second triac (62) whenever said zero cross detector (72) detects a zero crossing in the AC wave form from said AC power supply (56) during said off-time of said periodic output signal to enable said second triac (62) to conduct and energize said second coil means (24) to effect operation of said second valve means (22) during the off-time of said periodic output signal.

10. A control for controlling the temperature of a liquid in a container claimed in claim 9, characterised in that said periodic input signal established by said periodic signal generator (40) has a frequency of less than six cycles per minute.

11. A control for controlling the temperature of a liquid in a container as claimed in any one of claims 6 to 10, characterised in that said reference signal generator (26) is operable to establish an infinitely variable reference signal to infinitely vary the desired temperature of the liquid in the container and is operable to enable the temperature of liquid in the container to be infinitely varied between the temperature of the cold liquid in the second passageway means (16) and the temperature of the hot liquid in the first passageway means (14).

0018821

1/1

*Fig.1*

*Fig.2*

0018821

European Patent Office

**EUROPEAN SEARCH REPORT**

Application number

EP 80 30 1411

## DOCUMENTS CONSIDERED TO BE RELEVANT

| Category | Citation of document with indication, where appropriate, of relevant passages | Relevant to claim |
|---|---|---|
| | FR - A - 2 375 806 (LICENTIA PA-TENTVERWALTUNGS) <br><br> * Page 1, lines 1-6; page 3, line 9 - page 4, line 38; page 6, lines 33-36; figures 1-3 * <br><br> -- | 1-7,9, 11 |
| | DE - A - 2 619 477 (J. EBERSPACHER) <br><br> * Page 5, line 29 - page 6, line 10; page 9, lines 14-24; page 10, lines 18-30; figure 2 * <br><br> -- | 1,5-9 |
| | DE - A - 1 679 456 (Z. VARSEK) <br><br> * Page 1, lines 1-4; page 11, line 9 - page 13, line 15; figures 3,5 * <br><br> -- | 1,5-9 |
| | FR - A - 1 554 139 (TORBJORN LOFGREN) <br><br> * Page 1, right-hand column, line 5 - page 3, left-hand column, line 52; figures 1,2 * <br><br> -- | 1 |
| | DE - A - 2 614 509 (HANSA METALL-WERKE) <br><br> * Page 2, lines 1-7; page 4, lines 15-20; page 5, lines 7-11; figures 1,4 * <br><br> -- | 1,2 |
| A | FR - A - 2 316 653 (TECHNISCH BU-REAU JONGERIUS) <br><br> * Page 3, lines 3-31; figure * <br><br> -- ./. | 1 |

**CLASSIFICATION OF THE APPLICATION (Int. Cl. ')**

G 05 D 23/13
D 06 F 33/02

**TECHNICAL FIELDS SEARCHED (Int.Cl. ')**

G 05 D 23/13
D 06 F 33/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | |
|---|---|
| The present search report has been drawn up for all claims | |

| Place of search | Date of completion of the search | Examiner |
|---|---|---|
| The Hague | 06-06-1980 | HELOT |

EPO Form 1503.1  06.78

| | **EUROPEAN SEARCH REPORT** | | Application number |
|---|---|---|---|
| European Patent Office | | | EP 80 30 1411 |

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| A | GB - A - 808 222 (ROBERTSHAW-FUL-TON CONTROLS CO.) <br> * Page 3, lines 100-129; figure 4 * <br> -- | 1 | |
| A | GB - A - 742 585 (THE ENGLISH ELECTRIC COMPANY LTD.) <br> * Page 6, line 67 - page 7, line 41; figures 2,3 * <br> ---- | 1 | TECHNICAL FIELDS SEARCHED (Int. Cl. ³) |

EPO Form 1503.2   06.78